# DEMANDE DE BREVET EUROPEEN

(11) **EP 2 911 014 A2**
(43) Date de publication de la demande: **26.08.2015**
(21) Numéro de dépôt: 14186296.1
(22) Date de dépôt: 25.09.2014
(51) Int. Cl.: G04C 3/10, G04C 5/00, H02K 7/065, G04C 3/04

(54) **Interaction entre deux composants d'horlogerie**

(30) Priorité: 23.12.2013 EP 13199427; 11.07.2014 EP 14176816
(71) Demandeur: The Swatch Group Research and Development Ltd., 2074 Marin (CH)
(72) Inventeur: Di Domenico, Gianni, 2000 Neuchâtel (CH); Helfer, Jean-Luc, 2525 Le Landeron (CH); Winkler, Pascal, 2074 Marin (CH); Favre, Jérôme, 2000 Neuchâtel (CH)
(74) Mandataire: Giraud, Eric

(57) **Abrégé**

Mécanisme d'horlogerie (1000) comportant au moins un premier composant (1) et un deuxième composant (2) qui sont agencés pour coopérer l'un avec l'autre dans un mouvement relatif selon une trajectoire au niveau d'une zone d'interface (3) où une première piste (100) dudit premier composant (1) comporte des premiers moyens d'actionnement (110) agencés pour exercer un effort sans contact sur des deuxièmes moyens d'actionnement complémentaire (210) que comporte une deuxième piste (200) appartenant audit deuxième composant (2).

Tout au long d'un mouvement relatif monotone de ladite deuxième piste (200) par rapport à ladite première piste (100), l'énergie d'interaction entre ledit premier composant (1) et ledit deuxième composant (2) est de gradient variable, avec au moins une position de discontinuité dudit gradient qui correspond à une variation dudit effort sans contact.

Dans une variante, ladite position de discontinuité dudit gradient correspond à une variation brusque dudit effort sans contact.

## Description

### Domaine de l'invention

L'invention concerne un mécanisme d'horlogerie comportant au moins un premier composant et un deuxième composant qui sont agencés pour coopérer l'un avec l'autre dans un mouvement relatif selon une trajectoire au niveau d'une zone d'interface où une première piste dudit premier composant comporte des premiers moyens d'actionnement qui sont agencés pour exercer un effort sans contact sur des deuxièmes moyens d'actionnement complémentaire que comporte une deuxième piste appartenant audit deuxième composant.

L'invention concerne encore une pièce d'horlogerie comportant au moins un tel mécanisme.

L'invention concerne le domaine des mécanismes d'horlogerie.

### Arrière-plan de l'invention

L'horlogerie mécanique utilise principalement des contacts frottant pour transmettre un mouvement ou une force d'un composant à un autre, par exemple au niveau de roues d'engrenage, de sautoirs, de composants d'échappement, ou autres. Ces contacts frottant ont comme défauts principaux la perte d'énergie par frottement, et le lien entre la transmission de mouvement et la transmission d'effort. Par exemple, quand deux composants pivotent chacun autour d'un axe, ces deux composants étant en contact l'un avec l'autre, si la vitesse angulaire augmente du premier au deuxième composant, alors le couple diminue du premier au deuxième composant. Cette règle est valable à chaque instant, et pas seulement en moyenne. Elle découle de la conservation de l'énergie.

### Résumé de l'invention

L'invention se propose de réaliser une transmission d'énergie optimisée entre des composants d'un mécanisme d'horlogerie. Cette transmission d'énergie concerne notamment une transmission de mouvement ou une transmission d'effort sans contact.

Ainsi, l'invention concerne un mécanisme d'horlogerie comportant au moins un premier composant et un deuxième composant qui sont agencés pour coopérer l'un avec l'autre dans un mouvement relatif selon une trajectoire au niveau d'une zone d'interface où une première piste dudit premier composant comporte des premiers moyens d'actionnement qui sont agencés pour exercer un effort sans contact sur des deuxièmes moyens d'actionnement complémentaire que comporte une deuxième piste appartenant audit deuxième composant, caractérisé en ce que, tout au long d'un mouvement relatif monotone de ladite deuxième piste par rapport à ladite première piste, l'énergie d'interaction entre ledit premier composant et ledit deuxième composant est de gradient variable, avec au moins une position de discontinuité dudit gradient qui correspond à une variation dudit effort sans contact.

Selon une caractéristique de l'invention, l'énergie d'interaction entre ledit premier composant et ledit deuxième composant est de gradient non nul et variable, avec au moins une position de discontinuité dudit gradient qui correspond à une variation dudit effort sans contact.

L'invention concerne encore un mécanisme d'horlogerie comportant au moins un premier composant et un deuxième composant qui sont agencés pour coopérer l'un avec l'autre dans un mouvement relatif selon une trajectoire au niveau d'une zone d'interface où une première piste dudit premier composant comporte des premiers moyens d'actionnement qui sont agencés pour exercer un effort sans contact sur des deuxièmes moyens d'actionnement complémentaire que comporte une deuxième piste appartenant audit deuxième composant, caractérisé en ce que ledit premier composant évolue selon un premier degré de liberté, en ce que ledit premier ou deuxième composant évolue selon un deuxième degré de liberté distinct dudit premier de liberté, en ce que, tout au long d'un mouvement relatif monotone de ladite deuxième piste par rapport à ladite première piste selon le premier degré de liberté, l'énergie d'interaction entre ledit premier composant et ledit deuxième composant est de gradient variable, avec au moins une position de discontinuité dudit gradient qui correspond à une variation dudit effort sans contact, et en ce que le niveau d'énergie de ladite position de discontinuité varie lorsque le deuxième degré de liberté du premier ou deuxième composant varie.

Selon une caractéristique de l'invention, ladite position de discontinuité dudit gradient correspond à une variation brusque dudit effort sans contact.

L'invention concerne encore une pièce d'horlogerie comportant au moins un tel mécanisme, caractérisée en ce que ladite pièce est une montre.

### Description sommaire des dessins

D'autres caractéristiques et avantages de l'invention apparaîtront à la lecture de la description détaillée qui va suivre, en référence aux dessins annexés, où :

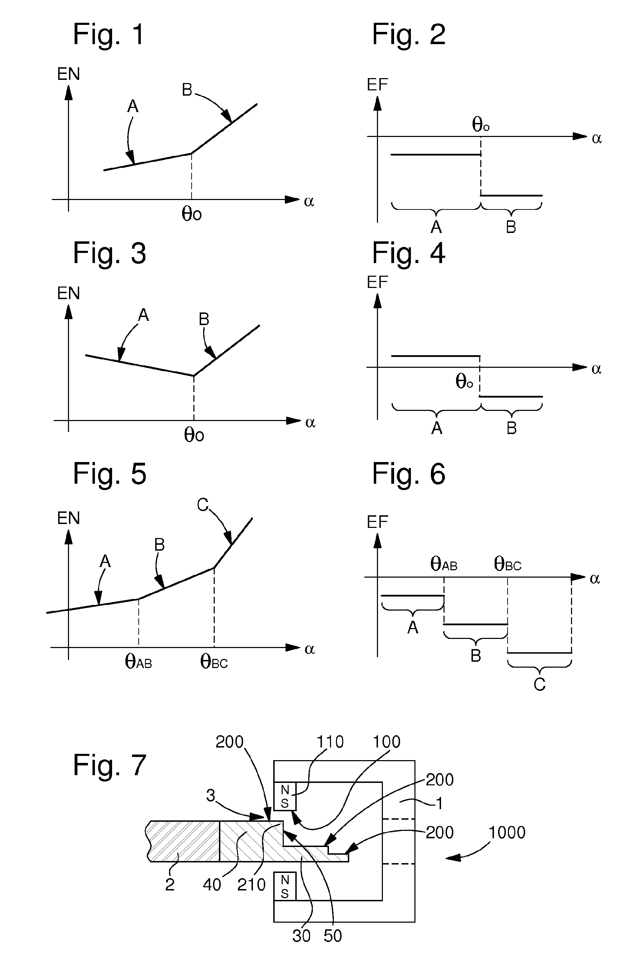

- la figure 1 est un diagramme représentant la variation de l'énergie d'un mécanisme selon l'invention comportant deux composants mobiles l'un par rapport à l'autre et comportant des moyens d'application d'efforts sans contact, en fonction de la variation relative d'un degré de liberté de l'un de ces deux composants par rapport à l'autre, et montre une discontinuité de gradient énergétique pour une valeur donnée;
- la figure 2 est un diagramme représentant, pour le mécanisme de la figure 1, la variation de l'effort de réaction ressenti par le composant mobile par rapport à l'autre, en fonction de la variation relative du même degré de liberté, et montre une variation brusque de cet effort pour la valeur de discontinuité de gradient énergétique de la figure 1 ;
- les figures 3 et 4 illustrent, de façon similaire aux figures 1 et 2, le cas du positionnement d'un deuxième composant sur lequel aucun couple n'est appliqué, de ce fait les gradients énergétiques de part et d'autre du seuil sont de signe contraire l'un à l'autre ;
- les figures 5 et 6 illustrent de façon similaire aux figures 1 et 2, la généralisation à plusieurs cassures de pente, entre des plages à gradients différents ;
- la figure 7 représente, de façon schématisée, partielle, et en coupe, un mécanisme d'horlogerie selon l'invention comportant des aimants sur un premier composant à profil en U, et une zone ferromagnétique avec des sections étagées sur une extrémité d'un deuxième composant, ce premier et ce deuxième composant sont représentés dans un positionnement correspondant au seuil de discontinuité de gradient énergétique ;
- les figures 8 à 23 illustrent schématiquement, de façon partielle, et en plan, des variantes de mise en oeuvre de l'invention, dans des configurations planes :
- la figure 8 représente un premier composant de contour quelconque et d'épaisseur constante, et un deuxième composant formé de deux masses aboutées l'une à l'autre, dans une position correspondant au seuil de discontinuité de gradient énergétique où le bord du premier composant est positionné à la frontière entre ces deux masses ;
- la figure 9 illustre une configuration similaire à la figure 8, où les deux masses sont de même largeur mais de hauteur différente ;
- la figure 10 représente un mécanisme selon l'invention du type d'une transmission came contre came, avec des contours périphériques particuliers du premier composant et du deuxième composant, avec ici le premier composant s'étendant sur un seul niveau, et le deuxième composant comportant un premier niveau et un deuxième niveau, superposés et localement débordant l'un par rapport à l'autre, dans une position correspondant au seuil de discontinuité de gradient énergétique où le bord du premier composant est positionné à l'aplomb du bord d'un des deux niveaux du deuxième composant;
- la figure 11 représente la combinaison d'un premier un composant étendu qui comporte un premier niveau et un deuxième niveau superposés et localement débordant l'un par rapport à l'autre. et d'un deuxième composant sensiblement ponctuel, en extrémité d'un bras, dans une position où le deuxième composant sensiblement ponctuel est positionné à l'aplomb du bord d'un des deux niveaux du premier composant ;
- la figure 12 est un diagramme, correspondant à la figure 11, montrant les deux pentes de l'énergie d'interaction, avec la hauteur du premier composant en ordonnée, et la coordonnée radiale en abscisse ;
- la figure 13 illustre une variante voisine de celle de la figure 11, avec le même premier composant, et un deuxième composant qui porte un élément à contour curviligne ;
- la figure 14 est le diagramme similaire à la figure 12, concernant le mécanisme de la figure 13 ;
- les figures 15 à 19 concernent plus particulièrement la transmission d'un effort indépendant du mouvement des composants du mécanisme :

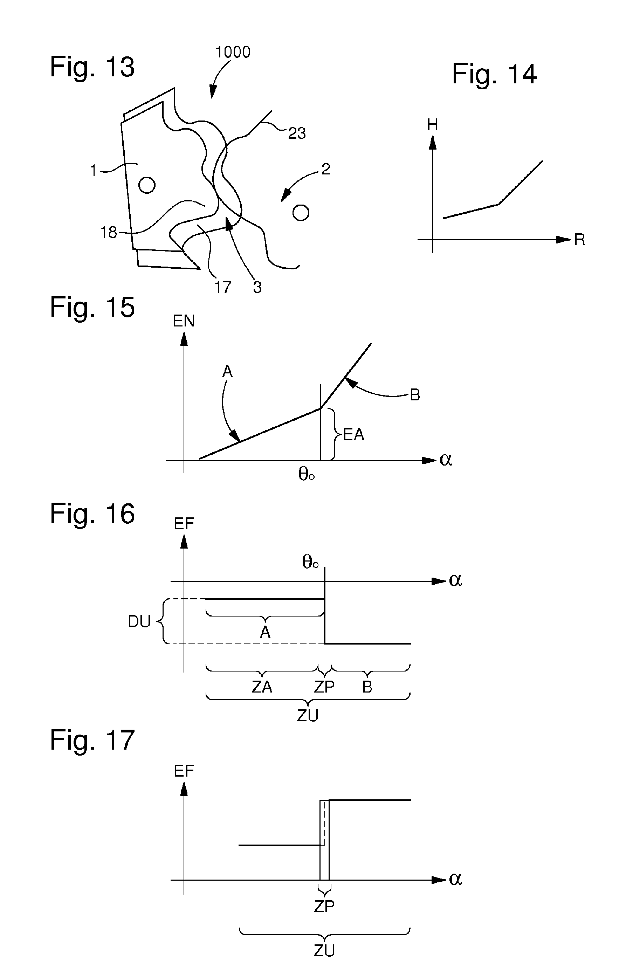

- la figure 15, similaire à la figure 1, fait apparaître l'énergie accumulée qui peut être restituée, et qui correspond au niveau énergétique à la cassure de pente au voisinage de la valeur de transition qui correspond à la discontinuité de gradient énergétique ;
- la figure 16, similaire à la figure 2, montre en ordonnée le domaine d'effort utile qui correspond à l'écart en ordonnée entre les niveaux d'effort des deux zones de gradients énergétiques différents, et montre en abscisse la zone utile de mouvement mécanique, qui inclut une zone d'accumulation, et une zone étroite de positionnement, au voisinage de cette valeur de transition θ0 ;
- la figure 17 montre la configuration inverse de la figure 16, où les niveaux d'effort sont positifs ;

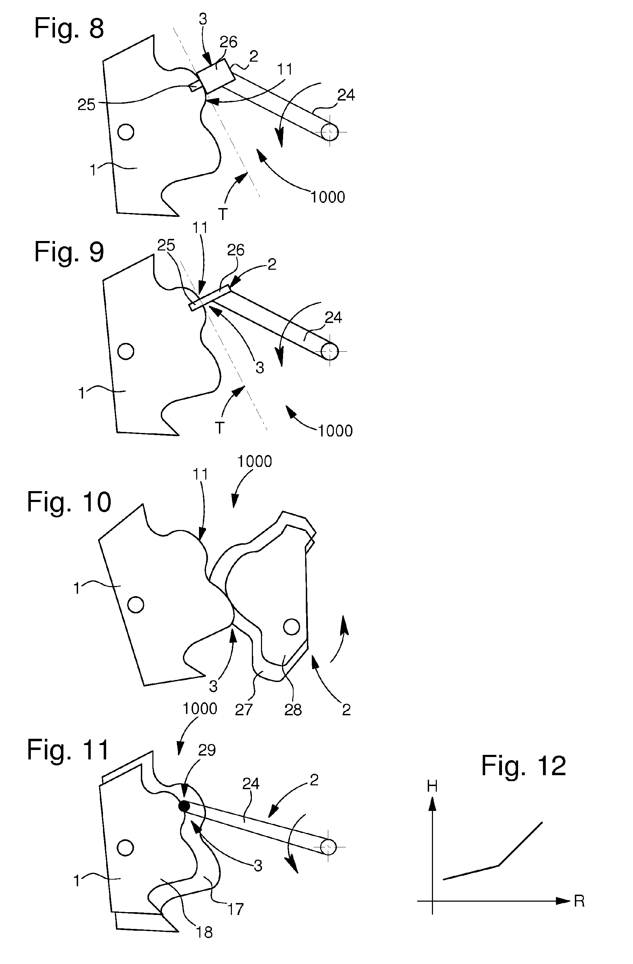

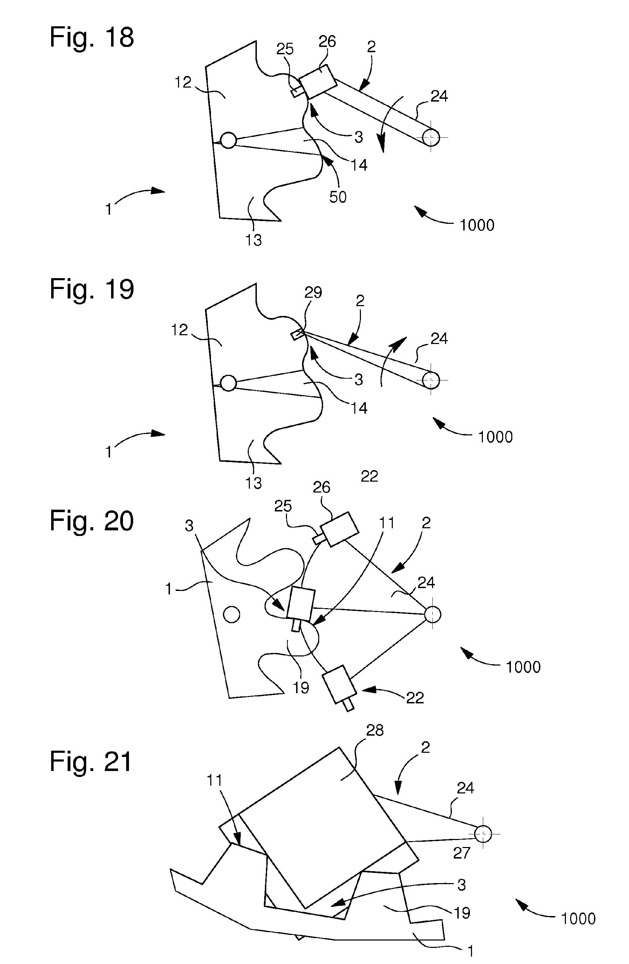

- la figure 18 représente une transformation sur la base du mécanisme de la figure 8 , où le premier composant 1 comporte deux zones d'épaisseur différente entre lesquelles se situe une zone de transition ;
- la figure 19 représente une combinaison du premier composant de la figure 8, et du deuxième composant sensiblement ponctuel de la figure 12 ; l'une des pentes est alors nulle, l'interaction entre les deux composants est réalisée ici en attraction, alors que les réalisations des autres figures sont réalisées en répulsion ;
- la figure 20 représente un engrenage, où le premier composant et le deuxième composant sont tous deux assimilables à des roues dentées, le premier composant comporte des excroissances, qui coopèrent avec une successions de dents fictives que comporte, montées sur des rayons, le deuxième composant, chacune de ces dents fictives comportant deux masses analogues à celles de la figure 8, et dont la coopération avec le bord du premier composant est similaire à celle décrite plus haut à la figure 8 ;
- la figure 21 représente un détail d'un sautoir coopérant avec un disque ou une étoile de quantième, le premier composant comporte des excroissances, qui coopèrent avec une palette constituée par un deuxième composant à deux niveaux comme dans la figure 10 ;

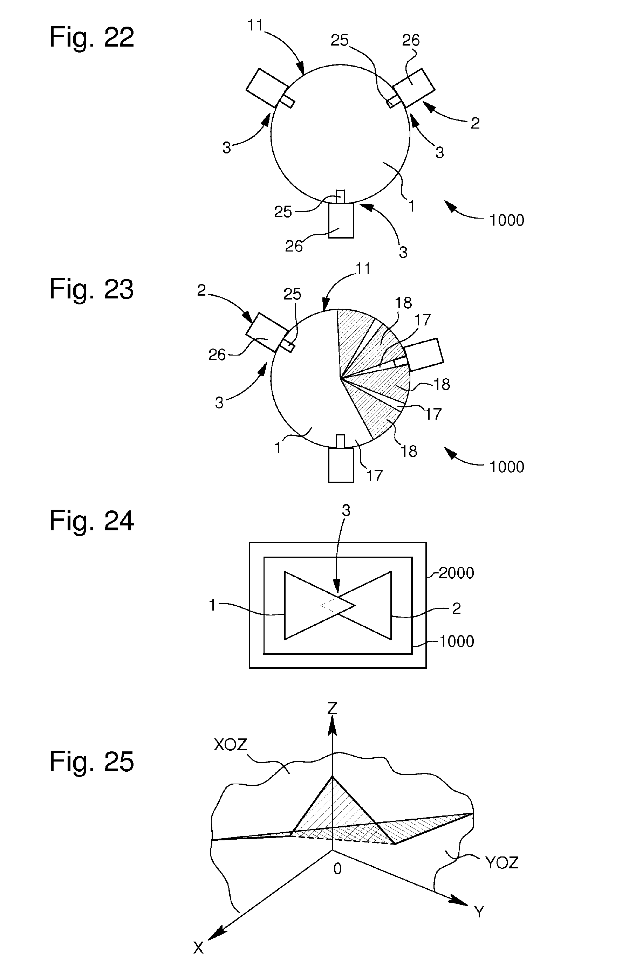

- la figure 22 représente un premier composant circulaire guidé en pivotement entre des deuxièmes composants fixes faisant chacun fonction de galet périphérique et comportant chacun deux masses analogues à celles de la figure 8, et dont la coopération avec le bord du premier composant est similaire à celle de la figures 8 ;
- la figure 23 combine la fonction de guidage de la figure 22 et une fonction de sautoir, le premier composant comportant à cet effet une alternance de secteurs de niveaux différents, comme dans la réalisation de la figure 11 ;
- la figure 24 est un schéma-blocs représentant une pièce d'horlogerie comportant un mécanisme selon l'invention avec un premier composant et un deuxième composant en interaction sans contact ;
- la figure 25 illustre la combinaison théorique et simplifiée, dans l'espace d'un premier diagramme d'énergie selon la figure 1 dans un premier plan XOZ, et d'un deuxième diagramme d'énergie dans un deuxième plan YOZ, définissant ensemble deux surfaces dont la délimitation correspond à un saut énergétique ;

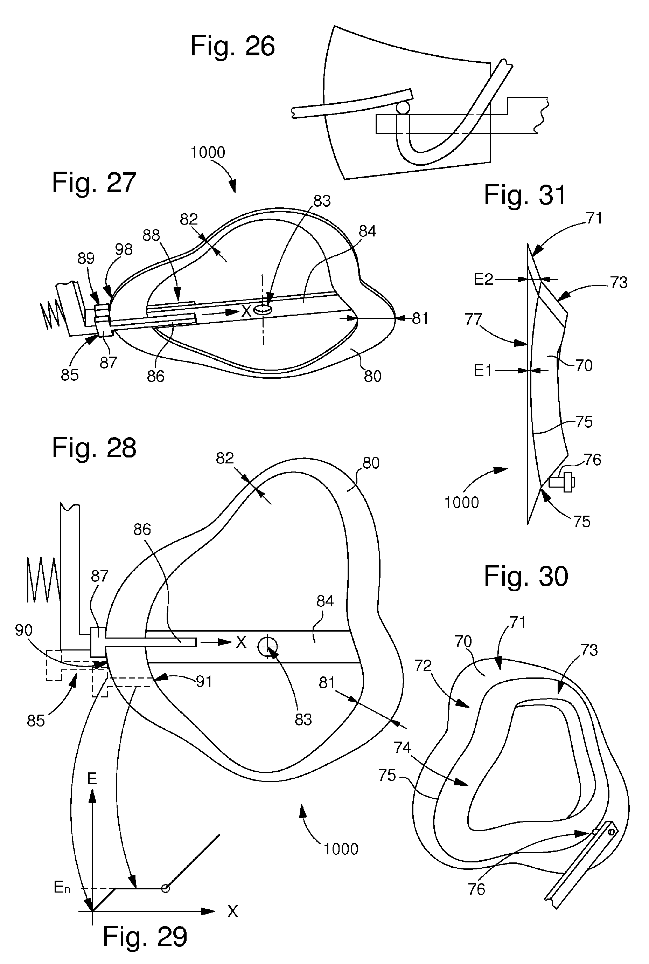

- la figure 26 représente, de façon schématisée et en plan, une application de l'invention à l'armage d'un marteau de sonnerie et à sa protection contre le rebond ;
- la figure 27 illustre, en perspective, la coopération entre d'une part une came plate, de section radiale variable, pivotante autour d'un pivot porté par un bras, et d'autre part un actionneur à profil en té de part et d'autre de la périphérie de cette came, la branche verticale du té se superposant à la périphérie de came, et la branche transversale marquant un arrêt en bordure de cette came ; la figure 28 est une vue en plan de cet ensemble, avec la représentation, en trait interrompu et en trait mixte, de deux positions relatives différentes du té par rapport à la came ; la figure 29 est un diagramme représentatif de la variation du niveau d'énergie en fonction de la pénétration relative X ;
- les figures 30 et 31 illustrent, en perspective et en vue de côté, une came tridimensionnelle avec à la fois des variations radiales et d'altitude, sur laquelle deux surfaces gauches sont sécantes au niveau d'une courbe gauche d'interface, cette came étant montrée en coopération avec un palpeur de type cylindrique.

### Description détaillée des modes de réalisation préférés

L'invention se propose de réaliser une transmission d'énergie optimisée entre des composants d'un mécanisme d'horlogerie. Cette transmission d'énergie concerne notamment une transmission de mouvement ou une transmission d'effort sans contact.

On appelle « effort » dans la suite de la description aussi bien un couple, une force, qu'un torseur avec la combinaison d'au moins un couple et d'au moins une force.

L'invention est applicable dans l'espace tridimensionnel. Pour une commodité d'illustration les exemples sont bi-dimensionnels, mais il faut comprendre que l'invention est applicable à un nombre quelconque de degrés de liberté, et pas seulement dans un même plan. Elle est ainsi applicable en particulier pour des mouvements de pivotement, de rotation, de translation, et à des mouvements combinés, tel que par exemple le pivotement d'un mobile combiné avec une translation comme pour une tige de remontoir ou similaire.

On appelle « mobile » dans la suite de la description tout composant susceptible d'effectuer un mouvement quelconque, et pas seulement un composant rotatif ou pivotant selon l'acceptation horlogère usuelle.

L'invention a pour but de permettre une transmission d'un effort d'un composant à l'autre sans perte d'énergie par frottement, et avec une cinématique ne dépendant pas de l'effort transmis. En somme, il s'agit de découpler le lien traditionnel entre, d'une part la transmission de mouvement et en particulier de vitesse, et d'autre part la transmission d'effort ou de couple.

L'invention utilise à cette fin la transmission d'efforts à distance.

Plus particulièrement, l'emploi de champs magnétiques ou/et électrostatiques permet de générer des efforts de répulsion et/ou d'attraction entre au moins deux composants, ce qui permet de transmettre un mouvement ou un effort sans contact entre deux de ces composants, et supprime donc les pertes d'énergie par frottement. De plus, l'interaction magnétique ou/et électrostatique entre les deux composants permet d'emmagasiner de l'énergie à un instant donné et de constituer un réservoir d'énergie tampon de stockage temporaire d'énergie, et de la restituer ultérieurement. L'invention se propose tout particulièrement de déterminer de façon extrêmement précise les conditions de cette restitution d'énergie, qui peut être effectuée en une ou plusieurs fois. Cela signifie que l'énergie conservée est celle d'un ensemble "premier composant + deuxième composant + interaction" et non plus seulement "premier composant + deuxième composant", ce qui permet de dissocier la transmission d'un mouvement de la transmission d'un effort en stockant temporairement de l'énergie dans "l'interaction". Une analogie mécanique peut consister en l'emploi d'un ressort-tampon entre deux composants.

On appelle ci-après « partie active » d'un mobile une zone émettrice d'un champ magnétique ou électrostatique, ou bien une zone réalisée dans un matériau ou avec un traitement lui permettant de réagir à un tel champ.

Des interactions de type magnétique entre deux composants ont déjà été proposées dans l'horlogerie mécanique. Toutefois, le principal défaut de ces interactions magnétiques est que la cinématique dépend de l'effort, force ou couple, exercé sur les composants. En d'autres termes, le mouvement transmis dépend alors de la force ou du couple transmis.

La présente invention vise à pallier ce dernier défaut. En effet, en choisissant judicieusement le potentiel d'interaction magnétique ou électrostatique entre les deux composants, on peut obtenir une cinématique indépendante de l'effort, force ou couple, transmis. Pour expliciter ce potentiel, les figures 1 et 2 illustrent le principe général, dans son application à un exemple non limitatif de deux composants en pivotement plan autour de deux axes distincts. Si l'angle du premier composant 1 est fixé, la figure 1 montre en ordonnée l'évolution de l'énergie d'interaction EN en fonction de l'angle relatif α que fait le deuxième composant 2 avec le premier 1, lorsque le deuxième composant 2 pivote. Une première zone A d'effort (ici un couple dans cet exemple particulier) correspond à une croissance sensiblement linéaire de l'énergie d'interaction EN en fonction de l'angle α selon une première pente jusqu'à un angle de transition θ0, et est suivie par une deuxième zone B d'effort qui correspond à une croissance sensiblement linéaire de l'énergie d'interaction E en fonction de l'angle α selon une deuxième pente, qui est supérieure en valeur absolue à la première pente. L'effort de réaction ressenti par le deuxième composant 2 est représenté sur le diagramme de la figure 2, avec en ordonnée l'effort EF et en abscisse le même angle α : une première portion correspond à un premier effort A, ici un couple, sensiblement constant, suivi par une deuxième portion avec un deuxième effort B sensiblement constant, le passage d'un niveau d'effort à l'autre se faisant au voisinage de l'angle de transition θ0. L'effort EF, ici un couple, a une valeur absolue égale à celle de la dérivée de l'énergie par rapport au degré de liberté concerné ; dans le présent exemple le degré de liberté est angulaire, la valeur est celle de la dérivée de l'énergie EN par rapport à l'angle α.

De cette manière, si on applique un couple C positif au deuxième composant 2, avec |couple A| < couple C < |couple B|, alors le deuxième composant 2 va se caler sur l'angle de transition θₒ. On voit que cet angle θ0 est indépendant du couple C, en tout cas pour une certaine plage du couple C.

Dans sa définition la plus générale, l'invention concerne un mécanisme d'horlogerie 1000 comportant au moins un premier composant 1 et un deuxième composant 2. Cet au moins un premier composant 1 et cet au moins un deuxième composant 2 sont agencés pour coopérer l'un avec l'autre dans un mouvement relatif selon une trajectoire au niveau d'une zone d'interface 3.

Le premier composant 1 comporte une première piste 100 qui comporte elle-même des premiers moyens d'actionnement 110. Le deuxième composant 2 comporte une deuxième piste 200 qui comporte elle-même des deuxièmes moyens d'actionnement complémentaire 210. Les premiers moyens d'actionnement 110 sont agencés pour exercer un effort sans contact sur ces deuxièmes moyens d'actionnement complémentaire 210, ou vice-versa.

Selon l'invention, tout au long d'un mouvement relatif monotone de la deuxième piste 200 par rapport à la première piste 100, l'énergie d'interaction entre le premier composant 1 et le deuxième composant 2 est de gradient variable, avec au moins une position de discontinuité de ce gradient, qui correspond à une variation de cet effort sans contact.

Plus particulièrement, l'énergie d'interaction entre le premier composant 1 et le deuxième composant 2 est de gradient non nul et variable, avec au moins une position de discontinuité de ce gradient qui correspond à une variation de l'effort sans contact.

Les premiers moyens d'actionnement 110 et les deuxièmes moyens d'actionnement complémentaire 210 sont choisis comme composants actifs et respectivement passifs, ou vice-versa, d'actionnement magnétique ou/et électrostatique.

De façon particulièrement avantageuse, cette position de discontinuité du gradient correspond à une variation brusque de l'effort sans contact, tel que visible sur la figure 2 au niveau de l'angle de transition θ0.

Dans une variante particulière, un tel premier composant 1 et un tel deuxième composant 2 sont agencés pour coopérer l'un avec l'autre dans un mouvement relatif selon une trajectoire répétitive au niveau d'une zone d'interface 3 pré-définie.

Dans une variante particulière, les deuxièmes moyens d'actionnement complémentaire 210 comportent au moins une zone de pénétration 30, qui est voisine et distincte d'une zone de blocage 40. Cette zone de pénétration 30 et cette zone de blocage 40 coopèrent de façon différente avec les premiers moyens d'actionnement 110.

Une cassure de pente située à la frontière entre cette zone de pénétration 30 et cette zone de blocage 40, et connexe avec chacune d'elles, correspond à une position de discontinuité du gradient.

Plus particulièrement, cette cassure de pente est une zone de barrière 50 qi correspond à cette position de discontinuité du gradient.

Cette cassure de pente, ou cette zone de barrière 50, peut consister en un simple front à la frontière entre deux masses de propriétés différentes, comme sur la figure 7, ou encore en une zone progressive, telle la zone 14 de la figure 18 ou 19, alors représentée sur le premier composant 1, car évidemment le premier composant 1 et le deuxième composant 2 peuvent chacun comporter les différentes caractéristiques illustrées ici seulement pour des cas particuliers non limitatifs. Les premiers moyens d'actionnement 110 peuvent donc comporter aussi au moins une zone de pénétration 30, qui est voisine et distincte d'une zone de blocage 40. Cette zone de pénétration 30 et cette zone de blocage 40 coopèrent de façon différente avec les deuxièmes moyens d'actionnement complémentaire 210, et sont également séparées par une zone de barrière 50 similaire à celle décrite ci-dessus.

Dans une variante particulière, la coopération des premiers moyens d'actionnement 110 avec les deuxièmes moyens d'actionnement complémentaire 210 permet, dans certaines première positions relatives du premier composant 1 et du deuxième composant 2, de les maintenir en synchronisation de vitesse ou de position, et, dans certaines autres deuxièmes positions relatives du premier composant 1 et du deuxième composant 2, d'autoriser le déplacement de l'un des deux par rapport à l'autre sous l'action d'un effort (couple ou/et force).

Dans une variante particulière, au moins au voisinage d'une position limite, les premiers moyens d'actionnement 110 exercent un premier effort sensiblement constant sur la zone de pénétration 30.

Dans une variante particulière, au moins au voisinage d'une position limite, les premiers moyens d'actionnement 110 exercent un deuxième effort sensiblement constant sur la zone de blocage 40.

Dans une variante particulière, au voisinage de cette position limite, un contour curviligne particulier du premier composant 1 fait face à une zone de barrière 50, telle que décrite plus haut, du deuxième composant 2.

Plus particulièrement, le mécanisme 1000 comporte un tel premier composant 1 et un tel deuxième composant 2, qui sont agencés pour effectuer un mouvement relatif dans une zone utile qui comporte une première partie correspondant à une première zone d'effort dans laquelle l'effort ou le couple relatif exercé par l'un de ces composants 1, 2, sur l'autre est à un premier niveau. Cette zone utile comporte une deuxième partie qui correspondant à une deuxième zone d'effort dans laquelle le couple ou l'effort relatif exercé par l'un de ces composants 1, 2, sur l'autre est à un deuxième niveau différent du premier niveau, au moins localement autour d'une position donnée, de façon à ce que, à l'interface à la frontière entre la première zone d'effort et la deuxième zone d'effort, le premier composant 1 et le deuxième composant 2 sont positionnés précisément l'un par rapport à l'autre, pour une gamme utile d'effort, notamment de couple déterminée,.

Plus particulièrement, dans la première zone d'effort le couple ou l'effort relatif exercé par l'un des composants 1, 2, sur l'autre est sensiblement constant au premier niveau, et dans la deuxième zone d'effort le couple ou l'effort relatif exercé par l'un des composants 1, 2, sur l'autre est sensiblement constant au deuxième niveau différent du premier niveau.

De façon particulière, le gradient d'énergie d'interaction entre le premier composant 1 et le deuxième composant 2 est supérieur dans cette deuxième zone d'effort à celui de cette première zone d'effort.

Dans une variante de réalisation facile à industrialiser, au moins un premier composant 1 et au moins un deuxième composant 2 interagissent l'un avec l'autre par l'action de champs magnétiques ou respectivement électrostatiques, et la première zone d'effort correspond à une accumulation d'énergie magnétique ou respectivement électrostatique lors d'un mouvement relatif entre ce premier composant 1 et ce deuxième composant 2.

Plus particulièrement, l'énergie accumulée dans la première zone d'effort, lors du mouvement relatif monotone de la deuxième piste 200 par rapport à la première piste 100, jusqu'à la position de discontinuité du gradient d'énergie, est constante et fixée par la conception du mécanisme 1000. Et, lors du franchissement de cette position de discontinuité du gradient, l'énergie stockée est restituée selon le même degré de liberté ou selon au moins un autre degré de liberté.

De façon particulière, dans la première zone d'effort et la deuxième zone d'effort, le gradient d'énergie d'interaction entre le premier composant 1 et le deuxième composant 2 est créé par la variation continue d'un paramètre physique qui participe à l'interaction magnétique ou respectivement électrostatique entre ce premier composant 1 et ce deuxième composant 2.

Plus particulièrement, la position de discontinuité du gradient qui correspond à une variation de l'effort sans contact est celle du début, ou de la fin, de l'entraînement de l'un des premier composant 1 et deuxième composant 2 par l'autre.

Les figures 3 et 4 illustrent, de façon similaire aux figures 1 et 2, le cas du positionnement d'un deuxième composant 2 sur lequel aucun couple n'est appliqué. Dans ce cas, le diagramme énergétique de la figure 3 présente une première zone A d'effort et une deuxième zone B d'effort, délimitées par un angle de transition θ0, et qui ont deux pentes de signes différents. La figure 4 montre les niveaux d'effort, qui sont aussi de signes opposés, et qui tendent toujours à ramener le deuxième composant 2 sur la position angulaire qui correspond à l'angle de transition θₒ.

Les figures 5 et 6 illustrent la généralisation à plusieurs cassures de pente pour avoir un positionnement du composant qui soit fonction de la plage d'effort, ici de couple. La figure 5 montre la succession de zones d'effort A, B, C, de pentes différentes, et délimitées par des angles intermédiaires θAB et θBC: La figure 6 montre que, si l'effort sur le deuxième composant 2 est tel que |couple A| < couple composant 2 < |couple B|, le deuxième composant 2 se positionne en θAB, alors que si |couple A| < couple composant 2 < |couple B|, la composant 2 se positionne en θBC. On peut bien sûr extrapoler ce raisonnement à un nombre quelconque de plages d'effort.

La figure 7 illustre un exemple de réalisation d'un mécanisme d'horlogerie 1000 avec des éléments magnétiques sur un premier composant 1 et sur un deuxième composant 2 qu'il comporte. Ce. premier composant 1 et ce deuxième composant 2 sont agencés pour coopérer l'un avec l'autre dans un mouvement relatif selon une trajectoire au niveau d'une zone d'interface 3, où une première piste 100 du premier composant 1 comporte des premiers moyens d'actionnement 110, ici de type aimant, agencés pour exercer un effort sans contact sur des deuxièmes moyens d'actionnement complémentaire 210, ici constitués par une zone ferromagnétique, que comporte une deuxième piste 200 appartenant au deuxième composant 2. Selon l'invention, tout au long d'un mouvement relatif monotone de la deuxième piste 200 par rapport à ladite première piste 100, l'énergie d'interaction entre le premier composant 1 et le deuxième composant 2 est de gradient non nul et variable, avec au moins une position de discontinuité de ce gradient qui correspond à une variation de cet effort sans contact. La deuxième piste 200 est ici étagée, et de ce fait l'interaction magnétique est variable lors du mouvement relatif d'insertion ou d'extraction du deuxième composant 2 par rapport au premier composant 1.

Différentes variantes de réalisation de cette figure 7 sont imaginables, notamment:
- premier composant 1 aimant et deuxième composant 2 en fer doux,
- ou premier composant 1 aimant et deuxième composant 2 aimant,
- ou premier composant 1 fer doux et deuxième composant 2 aimant.

Toujours dans le cadre de l'agencement de cette figure 7, on peut varier la géométrie des éléments magnétiques dans le plan perpendiculaire à l'axe de rotation du premier composant 1 ou du deuxième composant 2 selon le cas, ou aussi varier l'épaisseur des éléments magnétiques parallèlement à l'axe de rotation. En première approximation, on peut estimer le potentiel d'interaction, si l'entrefer est faible, par une énergie proportionnelle au produit de la surface d'intersection entre le premier composant 1 et le deuxième composant 2, par la hauteur du premier composant 1 dans la zone d'intersection et d'interface 3, par la hauteur du deuxième composant 2 dans la zone d'intersection et d'interface 3.

Les figures 8 à 23 illustrent, très schématiquement, des exemples simples et non limitatifs de variantes de mise en oeuvre de l'invention, dans des configurations planes selon lesquelles les deux zones à gradient d'énergie différents, de part et d'autre d'une frontière de positionnement, sont relativement faciles à réaliser.

Les figures 8 à 14 concernent plus particulièrement une transmission de mouvement indépendante de l'effort transmis, notamment du couple transmis.

Dans la figure 8, le premier composant 1 s'étend selon un plan, et le contour selon les coordonnées x et y dans ce plan du premier composant 1 est quelconque, l'épaisseur de ce premier composant 1 est constante, et le deuxième composant 2 est formé de deux masses 25 et 26, ici formées non limitativement de prismes parallélépipédiques, de même épaisseur mais de largeur différente dans la direction T tangente au premier composant 1 dans la zone d'interface 3, aboutées l'un à l'autre. Si on applique un effort, notamment un couple, sur le deuxième composant 2, celui-ci va toujours se positionner de façon à ce que le bord 11 du premier composant 1, dans cette zone d'intersection et d'interface 3, soit positionné à la frontière entre les deux masses 25 et 26, tel que visible sur la figure 8.

La figure 9 illustre une configuration similaire, où les deux masses 25 et 26 sont de même largeur mais de hauteur différente, comme ce peut aussi être le cas dans la figure 7.

Une généralisation de la variante précédente revient à construire une transmission du type came contre came, avec des contours périphériques du premier composant 1 et du deuxième composant 2 qui peuvent être quelconques, et être réalisés sous différentes formes, dont celle d'un engrènement. La figure 10 illustre un tel cas, avec un premier composant 1 s'étendant sur un seul niveau, et un deuxième composant 2 comportant un premier niveau 27 et un deuxième niveau 28, superposés et localement débordant l'un par rapport à l'autre. Notamment une simple différence d'épaisseur en périphérie du deuxième composant 2 permet de réaliser simplement cette variante.

Une autre variante consiste à combiner un composant étendu et un composant sensiblement ponctuel, tel que visible sur la figure 11, où le deuxième composant 2 comporte un stylet 29 sensiblement ponctuel en extrémité d'un bras 24. C'est ici le premier composant 1 qui comporte un premier niveau 17 et un deuxième niveau 18, superposés et localement débordant l'un par rapport à l'autre. Notamment une simple différence d'épaisseur en périphérie du premier composant 1 permet de réaliser simplement cette variante, où on joue sur des gradients de hauteur H différents sur le premier composant 1 pour générer les deux pentes de l'énergie d'interaction, tel que visible sur la figure 12, avec la hauteur H du premier composant 1 en ordonnée, et la coordonnée radiale R en abscisse.

La figure 13 illustre une variante voisine de celle de la figure 11, où l'un des composants en présence, ici le deuxième composant 2, porte un élément à contour curviligne 23, qui n'est d'ailleurs pas nécessairement plan, et qui correspond à l'intégration du composant ponctuel de la figure 11 le long d'un contour. Cet élément à contour curviligne 23 du deuxième composant 2 peut être étendu tangentiellement, à proximité immédiate du premier composant 1, mais avec une dimension très faible radialement, cet élément 23 peut être qualifié de filaire. La figure 14 est similaire à la figure 12 ci-dessus.

Les figures 15 à 19 concernent plus particulièrement la transmission d'un effort indépendant du mouvement des composants du mécanisme 100.

Non seulement la position est bien déterminée à la cassure de pente, mais aussi l'énergie d'interaction magnétique ou/électrostatique est parfaitement déterminée, comme on le voit ci-après. Ceci est applicable aux différentes variantes décrites non limitativement ci-dessus.

Une transformation sur la base du mécanisme de la figure 8 permet, tel que visible sur la figure 18, au premier composant 1 d'échanger de l'énergie au deuxième composant 2 indépendamment du mouvement de ce deuxième composant 2. Dans cet exemple non limitatif, le premier composant 1 comporte deux zones 12 et 13 d'épaisseur différente entre lesquelles peut se situer une zone de transition 14. Lorsque le premier composant 1 est en mouvement, notamment en pivotement, et que la partie active du deuxième composant 2 passe, dans l'exemple de la figure 18, de la zone 12 à la zone 13, un effort, notamment un couple, est exercé par le premier composant 1 sur le deuxième composant 2. En jouant sur les épaisseurs des zones 12 et 13, on peut varier cet effort échangé, sans pour autant changer la cinématique.

Tous les exemples des figures 9 à 13 peuvent, de façon similaire, être aussi généralisés à une transmission d'effort, notamment de couple, variable. On peut aussi les généraliser au cas où l'une des pentes est nulle. La figure 19 montre un tel exemple, où l'interaction entre les deux composants est réalisée en attraction, alors que les autres réalisations illustrées sont de préférence réalisées en répulsion.

La figure 15, similaire à la figure 1, fait apparaître l'énergie EA accumulée qui peut être restituée, et qui correspond au niveau énergétique à la cassure de pente au voisinage de l'angle de transition θ0.

La figure 16, similaire à la figure 2, montre le domaine DU d'effort utile (notamment de couple utile) qui correspond à l'écart en ordonnée entre les niveaux d'effort des zones A et B. Tandis qu'en abscisse on peut voir la zone utile de mouvement mécanique ZU, qui inclut une zone d'accumulation ZA, notamment d'accumulation magnétique ou/et électrostatique, et une zone étroite ZP de positionnement, notamment de positionnement magnétique ou/et électrostatique, au voisinage de l'angle de transition θ0. La figure 17 montre la configuration inverse où les niveaux d'effort sont positifs.

Les figures 20 à 23 illustrent quelques exemples, non limitatifs, d'application concrète à l'horlogerie.

La figure 20 illustre un engrenage, où le premier composant 1 et le deuxième composant 2 sont tous deux assimilables à des roues dentées. Le premier composant 1 comporte sur cet exemple non limitatif des excroissances 19, qui coopèrent avec une successions de dents fictives 22 que comporte, montées sur des rayons 24, le deuxième composant 2, chacune de ces dents fictives 22 comportant deux masses 25 et 26 analogues à celles de la figure 8 ou à celles de la figure 9, et dont la coopération avec le bord 11 du premier composant 1 est similaire à celle décrite plus haut concernant ces figures 8 et 9. La figure 21 illustre un détail d'un sautoir coopérant avec une étoile de quantième ou similaire, avec l'interaction d'une palette constituée par un deuxième composant 2 à deux niveaux 27 et 28 comme dans la figure 10, avec des excroissances 19 similaires à des dents d'un premier composant 1.

La figure 22 illustre le guidage d'un premier composant 1, par exemple en pivotement, entre des deuxièmes composants 2 fixes faisant chacun fonction de galet périphérique et comportant chacun deux masses 25 et 26 analogues à celles de la figure 8 ou à celles de la figure 9, et dont la coopération avec le bord 11 du premier composant 1 est similaire à celle décrite plus haut concernant ces figures 8 et 9 ; comme il n'y pas de contact mécanique et donc de pertes par frottement, on réalise ainsi un guidage sans jeu. La figure 23 combine cette fonction de guidage de la figure 22 et une fonction de sautoir, et, à cet effet, le premier composant 1 comporte une alternance de secteurs de niveaux différents 17 et 18, comme dans la réalisation de la figure 11.

Sans illustrer toutes les applications horlogères possibles, qui sont nombreuses, on peut encore citer comme exemples non limitatifs :
- réalisation d'une transformation de mouvement par came : le premier composant 1 a un contour de came, le deuxième composant 2 a le contour d'une bascule sur laquelle appuie un ressort. En tournant la came, on arme le ressort ou on le désarme. Un exemple d'application est un ressort de déclenchement d'un quantième instantané ;
- réalisation d'une fonction d'initialisation par came-coeur: le premier composant 1 comporte un contour de coeur de compteur de chronographe, et le deuxième composant 2 adopte le contour d'un marteau qui appuie sur le coeur pour mettre à zéro le compteur.
- réalisation d'un maintien par sautoir: le premier composant 1 a par exemple un contour similaire à celui d'un disque quantième avec des dents, et le deuxième composant 2 a le contour d'un sautoir qui positionne le disque dans des positions discrètes. Le deuxième composant 2 peut être monté en pivotement autour d'un axe, avec un ressort de rappel, ou alors être fixe, c'est le potentiel magnétique ou/et électrostatique qui assure le positionnement ;
- réalisation d'un mécanisme de sonnerie, symbolisé en figure 26, avec un premier composant 1 et un deuxième composant 2 qui remplacent, l'un le ressort d'armage, et l'autre le contre-ressort.

L'invention permet de très nombreuses configurations, en jouant notamment sur plusieurs degrés de liberté à la fois.

La figure 27 illustre la coopération entre une came plate 80 et un actionneur 85. La came 80 est, de section radiale variable entre un maximum 81 et un minimum 82, ici représentée sensiblement sous la forme d'un trilobe dont les excroissances radiales sont aussi les zones de plus forte section. Cette came 80 est pivotante autour d'un pivot 83 porté par un bras 84. L'actionneur 85 est double, et a un profil en té de part et d'autre de la périphérie de cette came 80 : la branche verticale 86, 88, du té est agencée pour se superposer à la périphérie de came, et la branche transversale 87, 89, est agencée pour marquer un arrêt en bordure externe 90 de la came 80.

Selon un degré de liberté la pente peut être nulle.

Et, selon un autre degré de liberté, il est facile de faire varier la largeur de la came 80 dans la zone de coopération avec l'actionneur 85.

La figure 28 montre, en trait interrompu et en trait mixte, deux positions relatives différentes du té par rapport à la came ;
- une première position où l'extrémité distale de la branche verticale 86 arrive en bordure externe 90 de la came 80, le niveau d'énergie de la figure 29 est alors nul ;
- une deuxième position où l'extrémité distale de la branche verticale 86 arrive en bordure interne 91 de la came 80, le niveau d'énergie de la figure 29 est alors constant à un niveau E1, jusqu'à ce que la branche transversale 87 arrive en position d'arrête n bordure externe 90 de la came.

La section radiale, variable, de la came détermine la longueur de la rampe.

Les ventres et les creux radiaux du profil de came permettent de modifier le point d'application de l'arrêt de barrière.

La combinaison de la section et des positions de ventres et creux permet, ainsi, de moduler à la demande la variation de l'énergie E1 de l'actionneur 85 par rapport au champ entre l'actionneur 85 et la came 80.

Dans une réalisation particulière, en répulsion, et simplifiée, la came 80 est magnétisée.

On remarque que, dans cette exécution, l'entrefer est toujours identique, ce qui assure un bon fonctionnement.

En somme, dans ce mécanisme de la figure 27, qui correspond au cas où un des gradients est nul, tel que visible sur la figure 29, on a un plateau d'énergie d'étendue variable : le premier composant constitué par l'actionneur évolue sur un premier degré de liberté, qui est ici en translation, tandis que le deuxième composant constitué par la came 80 évolue selon une deuxième degré de liberté en rotation, et c'est la largeur capable de la came en regard de l'actionneur qui détermine l'étendue de la rampe, et donc le niveau du plateau d'énergie. Le niveau d'énergie de la position de discontinuité varie lorsque le deuxième degré de liberté du premier ou deuxième composant varie.

Ce mécanisme, qui travaille sur deux degrés de liberté, est de réalisation facile et de faible encombrement, aussi bien en réalisation magnétique qu'électrostatique, et se prête bien à des applications variées, telles qu'une came de déclenchement de calendrier, où sa configuration permet de s'affranchir des contraintes toujours délicates liées à la transmission d'un couple élevé du sautoir et à une vitesse importante, ou encore qu'une commande de répétition minutes, ou encore un coeur de chronographe, qui nécessite transmission de couple constante pour vaincre une friction constante et où il faut, lors du fort couple instantané exercé lors d'une remise à zéro, réguler la transmission de vitesse, et où la rampe de pénétration du bras vertical 86 sur la came 80 suffit à remplir cette fonction.

Les figures 30 et 31 représentent une variante avec une came tridimensionnelle 70 avec à la fois des variations radiales et d'altitude, sur laquelle deux surfaces gauches sont sécantes au niveau d'une courbe gauche d'interface 75, cette came étant montrée en coopération avec un palpeur 76 de type cylindrique. Les figures montrent une forme trilobée, avec, d'un premier côté de la courbe d'interface 15, des surfaces en plain 71 et en creux 72, toutes de plus faible pente par rapport à un plan de référence 77 que les surfaces correspondantes 73, 74, situées de l'autre côté de la courbe 75. Dans une exécution simplifiée représentée sur les figures, la pente des surfaces situées d'un même côté de la courbe 75 est toujours la même, seule leur largeur varie (de E1 à E2 sur la figure 31). Le niveau de l'énergie varie ainsi selon la position du point de contact sur le pourtour de came. On peut naturellement, dans une réalisation plus complexe, faire varier à la fois la pente et l'altitude de la courbe 75 par rapport au plan 77.

L'invention concerne encore une pièce d'horlogerie 2000 comportant au moins un tel mécanisme 1000, cette pièce 2000 est notamment une montre. On comprend qu'un tel mécanisme 1000 peut être incorporé au mouvement, ou encore à un mécanisme annexe tel un mécanisme de sonnerie ou similaire, ou encore à un module additionnel, ou autre. Les seules limites sont celles de la protection des autres composants ou sous-ensembles de la pièce d'horlogerie par rapport aux champs magnétiques ou/et électrostatiques mis en oeuvre, en particulier si certains de ces sous-ensembles utilisent, pour leur fonctionnement propre, des champs magnétiques ou/et électrostatiques.

## Revendications

1. Mécanisme d'horlogerie (1000) comportant au moins un premier composant (1) et un deuxième composant (2) qui sont agencés pour coopérer l'un avec l'autre dans un mouvement relatif selon une trajectoire au niveau d'une zone d'interface (3) où une première piste (100) dudit premier composant (1) comporte des premiers moyens d'actionnement (110) qui sont agencés pour exercer un effort sans contact sur des deuxièmes moyens d'actionnement complémentaire (210) que comporte une deuxième piste (200) appartenant audit deuxième composant (2), **caractérisé en ce que**, tout au long d'un mouvement relatif monotone de ladite deuxième piste (200) par rapport à ladite première piste (100), l'énergie d'interaction entre ledit premier composant (1) et ledit deuxième composant (2) est de gradient variable, avec au moins une position de discontinuité dudit gradient qui correspond à une variation dudit effort sans contact.

2. Mécanisme (1000) selon la revendication 1, **caractérisé en ce que** l'énergie d'interaction entre ledit premier composant (1) et ledit deuxième composant (2) est de gradient non nul et variable, avec au moins une position de discontinuité dudit gradient qui correspond à une variation dudit effort sans contact.

3. Mécanisme d'horlogerie (1000) comportant au moins un premier composant (1) et un deuxième composant (2) qui sont agencés pour coopérer l'un avec l'autre dans un mouvement relatif selon une trajectoire au niveau d'une zone d'interface (3) où une première piste (100) dudit premier composant (1) comporte des premiers moyens d'actionnement (110) qui sont agencés pour exercer un effort sans contact sur des deuxièmes moyens d'actionnement complémentaire (210) que comporte une deuxième piste (200) appartenant audit deuxième composant (2), **caractérisé en ce que** ledit premier composant (1 ; 85) évolue selon un premier degré de liberté, **en ce que** ledit premier ou deuxième composant (2 ; 80) évolue selon un deuxième degré de liberté distinct dudit premier de liberté, **en ce que**, tout au long d'un mouvement relatif monotone de ladite deuxième piste (200) par rapport à ladite première piste (100) selon le premier degré de liberté, l'énergie d'interaction entre ledit premier composant (1) et ledit deuxième composant (2) est de gradient variable, avec au moins une position de discontinuité dudit gradient qui correspond à une variation dudit effort sans contact, et **en ce que** le niveau d'énergie de ladite position de discontinuité varie lorsque le deuxième degré de liberté du premier ou deuxième composant varie.

4. Mécanisme (1000) selon l'une des revendications 1 à 3, **caractérisé en ce que** ladite position de discontinuité dudit gradient correspond à une variation brusque dudit effort sans contact.

5. Mécanisme (1000) selon l'une des revendications 1 à 4, **caractérisé en ce que** lesdits deuxièmes moyens d'actionnement complémentaire (210) comportent au moins une zone de pénétration (30) voisine et distincte d'une zone de blocage (40), qui coopèrent de façon différente avec lesdits premiers moyens d'actionnement (110), et à la frontière desquelles une cassure de pente correspond à une dite position de discontinuité dudit gradient.

6. Mécanisme (1000) selon la revendication 5, **caractérisé en ce que** ladite cassure de pente est une zone de barrière (50) qui correspond à une dite position de discontinuité dudit gradient.

7. Mécanisme (1000) selon l'une des revendications précédentes, **caractérisé en ce que** la coopération desdits premiers moyens d'actionnement (110) avec lesdits deuxièmes moyens d'actionnement complémentaire (210) permet, dans certaines première positions relatives dudit premier composant (1) et dudit deuxième composant (2), de les maintenir en synchronisation de vitesse ou de position, et dans certaines autres deuxièmes positions relatives dudit premier composant (1) et dudit deuxième composant (2) d'autoriser le déplacement de l'un des deux par rapport à l'autre sous l'action d'une force ou/et d'un couple.

8. Mécanisme (1000) selon l'une des revendications précédentes, **caractérisé en ce que** un dit premier composant (1) et un dit deuxième composant (2) sont agencés pour coopérer l'un avec l'autre dans un mouvement relatif selon une trajectoire répétitive au niveau d'une zone d'interface (3).

9. Mécanisme (1000) selon l'une des revendications précédentes, **caractérisé en ce que**, au moins au voisinage d'une position limite, lesdits premiers moyens d'actionnement (110) exercent un premier effort sensiblement constant sur ladite zone de pénétration (30).

10. Mécanisme (1000) selon l'une des revendications 1 à 8, **caractérisé en ce que**, au moins au voisinage d'une position limite, lesdits premiers moyens d'actionnement (110) exercent un deuxième effort sensiblement constant sur ladite zone de blocage (40).

11. Mécanisme (1000) selon les revendications 9 et 10, **caractérisé en ce que**, au voisinage de ladite position limite, un contour curviligne particulier (150) dudit premier composant (1) fait face à une dite zone de barrière (50) dudit deuxième composant (2).

12. Mécanisme (1000) selon l'une des revendications précédentes, **caractérisé en ce qu'**il comporte un dit premier composant (1) et un dit deuxième composant (2) qui sont agencés pour effectuer un mouvement relatif dans une zone utile qui comporte une première partie correspondant à une première zone d'effort dans laquelle le couple ou l'effort relatif exercé par l'un desdits composants (1 ; 2) sur l'autre est à un premier niveau, et qui comporte une deuxième partie correspondant à une deuxième zone d'effort dans laquelle le couple ou l'effort relatif exercé par l'un desdits composants (1 ; 2) sur l'autre est à un deuxième niveau différent dudit premier niveau, au moins localement autour d'une position donnée, de façon à ce que, à l'interface à la frontière entre ladite première zone d'effort et ladite deuxième zone d'effort, ledit premier composant (1) et ledit deuxième composant (2) sont positionnés précisément l'un par rapport à l'autre, pour une gamme utile d'effort déterminée.

13. Mécanisme (1000) selon la revendication 12, **caractérisé en ce que** dans ladite première zone d'effort le couple ou l'effort relatif exercé par l'un desdits composants (1 ; 2) sur l'autre est sensiblement constant audit premier niveau, et **en ce que** dans ladite deuxième zone d'effort le couple ou l'effort relatif exercé par l'un desdits composants (1 ; 2) sur l'autre est sensiblement constant audit deuxième niveau différent dudit premier niveau.

14. Mécanisme (1000) selon la revendication 11, **caractérisé en ce que** le gradient d'énergie d'interaction entre ledit premier composant (1) et ledit deuxième composant (2) est supérieur dans ladite deuxième zone d'effort à celui de ladite première zone d'effort.

15. Mécanisme (1000) selon la revendication précédente, **caractérisé en ce que** ledit au moins un premier composant (1) et ledit au moins un deuxième composant (2) interagissent l'un avec l'autre par l'action de champs magnétiques ou respectivement électrostatiques, et **en ce que** ladite première zone d'effort correspond à une accumulation d'énergie magnétique ou respectivement électrostatique lors d'un mouvement relatif entre ledit au moins un premier composant (1) et ledit au moins un deuxième composant (2).

16. Mécanisme (1000) selon la revendication précédente, **caractérisé en ce que** ladite énergie accumulée dans ladite première zone d'effort, lors dudit mouvement relatif monotone de ladite deuxième piste (200) par rapport à ladite première piste (100), jusqu'à ladite position de discontinuité dudit gradient, est constante et fixée par la conception dudit mécanisme (1000).

17. Mécanisme (1000) selon la revendication précédente, **caractérisé en ce que**, lors du franchissement de ladite position de discontinuité dudit gradient, ladite énergie stockée est restituée selon le même degré de liberté ou selon au moins un autre degré de liberté.

18. Mécanisme (1000) selon la revendication 16 ou 17, **caractérisé en ce que**, dans ladite première zone d'effort et ladite deuxième zone d'effort, ledit gradient d'énergie d'interaction entre ledit premier composant (1) et ledit deuxième composant (2) est créé par la variation continue d'un paramètre physique qui participe à l'interaction magnétique ou respectivement électrostatique entre ledit au moins un premier composant (1) et ledit au moins un deuxième composant (2).

19. Mécanisme (1000) selon l'une des revendications précédentes, **caractérisé en ce que** ladite position de discontinuité dudit gradient qui correspond à une variation dudit effort sans contact est celle du début, ou de la fin, de l'entraînement de l'un desdits premier composant (1) et deuxième composant (2) par l'autre.

20. Pièce d'horlogerie (2000) comportant au moins un mécanisme (1000) selon une des revendications précédentes, **caractérisé en ce que** ladite pièce (2000) est une montre.
